(19) Europäisches Patentamt
European Patent Office
Office européen des brevets

(11) **EP 4 603 673 A1**

(12) **EUROPEAN PATENT APPLICATION**
published in accordance with Art. 153(4) EPC

(43) Date of publication:
**20.08.2025 Bulletin 2025/34**

(21) Application number: **23876708.1**

(22) Date of filing: **10.10.2023**

(51) International Patent Classification (IPC):
***E21B 7/04*** (2006.01)

(86) International application number:
**PCT/CN2023/123822**

(87) International publication number:
**WO 2024/078506 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 CN 202211253874**

(71) Applicants:
• **China Coal Technology & Engineering Group
Beijing 100013 (CN)**
• **CCTEG Chongqing Research Institute
Chongqing 400039 (CN)**

(72) Inventors:
• **LIU, Jianzhong
Beijing 100013 (CN)**
• **SUN, Haitao
Beijing 100013 (CN)**
• **WANG, Qingfeng
Beijing 100013 (CN)**
• **WU, Wenbin
Beijing 100013 (CN)**
• **HU, Yunbing
Beijing 100013 (CN)**
• **WANG, Hao
Beijing 100013 (CN)**
• **ZHAO, Xusheng
Beijing 100013 (CN)**
• **YAN, Baoyong
Beijing 100013 (CN)**
• **LI, Liangwei
Beijing 100013 (CN)**
• **LEI, Yi
Beijing 100013 (CN)**
• **KANG, Houqing
Beijing 100013 (CN)**

• **WANG, Zhen
Beijing 100013 (CN)**
• **WANG, Ran
Beijing 100013 (CN)**
• **CHEN, Zeping
Beijing 100013 (CN)**
• **SUN, Peng
Beijing 100013 (CN)**
• **SUN, Dongling
Beijing 100013 (CN)**
• **LI, Rifu
Beijing 100013 (CN)**
• **WANG, Guozhen
Beijing 100013 (CN)**
• **NING, Erqiang
Beijing 100013 (CN)**
• **ZHU, Kun
Beijing 100013 (CN)**
• **LIU, Yanbao
Beijing 100013 (CN)**
• **YAO, Zhuangzhuang
Beijing 100013 (CN)**
• **LI, Yanming
Beijing 100013 (CN)**
• **PAN, Xuesong
Beijing 100013 (CN)**
• **DUAN, Tianzhu
Beijing 100013 (CN)**
• **LIU, Yang
Beijing 100013 (CN)**
• **HU, Wanli
Beijing 100013 (CN)**
• **CUI, Shaobei
Beijing 100013 (CN)**

(74) Representative: **advotec.
Patent- und Rechtsanwaltspartnerschaft mbB
Widenmayerstraße 4
80538 München (DE)**

(54) **METHOD AND APPARATUS FOR REGIONALIZED COAL MINE METHANE DRAINAGE IN DEEP HOLE**

EP 4 603 673 A1

**(Cont. next page)**

(57)     Disclosed is an apparatus for regionalized coal mine methane drainage in a deep hole, comprising a high-pressure large-flow centralized liquid supply apparatus, a while-drilling radar geological detection apparatus (4), a deep-hole self-adaptive directional drilling rig apparatus, an electromagnetic transmission high-pressure sealing column (5), and an open-hole while-drilling staged fracturing tool string. The while-drilling radar geological detection apparatus continuously detects a geological formation and a coal-rock interface in real time in a drilling process; the deep-hole self-adaptive directional drilling rig apparatus adaptively adjusts a propelling force and a swivel speed on the basis of the detection result, so as to improve the drilling efficiency, and reduce the probability of drill jamming and bit balling in the drilling process; and methane control in a large area, and in particular, the design of drainage boreholes, while-drilling radar geological detection, self-adaptive drilling, staged fracturing of main boreholes, and while-drilling fracturing of branch boreholes of a weak seam can be effectively guided, so as to implement advanced and highly-efficient drainage of methane of a coal mine dominated by the weak seam in a laneless down-hole large area. Further disclosed is a method of using the apparatus.

FIG. 2

**Description**

**CROSS-REFERENCE TO RELATED APPLICATION**

This application claims priority to and benefits of Chinese Patent Application No. 202211253874.9, filed on October 13, 2022, the entire contents of which are incorporated herein by reference.

**FIELD**

The present invention relates to the field of underground coal mine gas drainage, and more particularly to a method for regionalized coal mine gas drainage in a deep hole and a device for regionalized coal mine gas drainage in a deep hole.

**BACKGROUND**

Taking the promulgation of "Regulations on Prevention and Control of Coal and Gas Outburst" in 2009 as a sign, the principle of outburst prevention was put forward, in which regional outburst prevention measures were taken first and local outburst prevention measures were supplemented. China has entered a first stage of regional gas control, in which regional outburst prevention is a main measure. Although a range required for first stage region pre-drainage is relatively small, there is still a problem of periodic cyclic alternation. For a section with a length of 1,000m, dozens of cycles need to be alternated to complete excavation of a working face mining roadway. The contradiction between outburst prevention and excavation operations has not been fundamentally solved. A problem of drainage time and quality difficult to reliably ensure still exists, and even is very serious. Prevention measures of gas outburst in a predrainage coal seam based on a through-seam borehole can achieve regional pre-drainage of a whole section and meet required indicators before mining. However, a biggest problem of this way is a large amount of engineering, long construction period and high cost. In some coal mines, it needs to arrange three or four rock laneways to make the through-seam borehole cover the whole section of coal seam, a rock laneway excavation speed is delayed, a borehole construction period and pre-drainage time are long, and overall cost is high.

Detailed Rules for the Prevention and Control of Coal and Gas Outbursts (hereinafter referred to as the Detailed Rules for Prevention of Outburst) (2019 Edition) for the first time lists "long directional borehole pre-draining coal seam gas in a strip of coal roadway" as a regional outburst prevention measure, and a control range has been improved, but the problem of alternation of drainage and excavation still exists, and a kilometer working face has to be alternated many times. This not only affects a comprehensive excavation speed, but also a key point is that as long as there is excavation, drainage and the like, there is a problem that a drainage effect is difficult to ensure. In terms of drilling and control, when a regional range increases, occurrence conditions of coal seams and roof and floor in the region vary greatly, and requirements for drilling trajectory control are higher. An existing while-drilling measurement device is 5 to 8m away from a drill bit, and trajectory parameters are mainly measured statically, which leads to a lag in drilling trajectory measurement and control. In addition, an operation of existing directional drilling rig and an adjustment of drilling trajectory rely heavily on manual experience. Operators have large differences in experience levels, resulting in a large error in the adjustment of drilling trajectory.

In addition, most of long directional boreholes that do not adopt permeability enhancement measures has a problem of "drilling in, but not being able to pump out". A reason for the high cost and low effect of such borehole construction is mainly that current hydraulic fracturing and a borehole construction operation are not close, a device is not universal, no permeability enhancement operation is performed after construction, and a permeability enhancement operation cannot be performed even more after the drilling rig is withdrawn. At present, a most suitable permeability enhancement technology for the long directional borehole is still hydraulic fracturing. Therefore, a set of drilling and hydraulic fracturing device with a simple structure and convenient operation is urgently needed.

To sum up, in view of the fact that a current gas control technology cannot avoid the problem of alternation of drainage, excavation and mining, or the problem of a large amount of engineering by using a special control roadway, it is urgently needed a method and a device for regionalized underground coal mine drainage in a deep hole for coal seam gas drainage in a whole mining area. Based on this method and device, while-drilling detection and adaptive drilling can be realized, and advance predrainage of the whole mining area can be achieved. Finally, after pre-drainage of a mining area reaches a standard, it can be put into a mining target of this section, so as to avoid or minimize the alternation of drainage, excavation and mining in a section.

**SUMMARY**

A main purpose of the present invention is to solve problems that it is currently impossible to guide drilling rig construction via while-drilling geological detection, an existing directional drilling rig operation and a drilling trajectory adjustment are heavily dependent on manual experience, there is no system for parameter design, and hydraulic fracturing is not performed while drilling. A measurement of geological information of a long directional borehole while drilling, an autonomous adjustment of drilling process parameters based on geological information detected while drilling, and hydraulic fracturing while drilling are realized. A set of a method and a device for regionalized underground coal mine drainage in a deep hole with a simple system, a simple operation and an easy implementation is formed, which takes a whole mining area as the scope.

In order to achieve the above purpose, technical solutions of the present invention are as follows.

An embodiment of the disclosure provides a device for regionalized coal mine gas drainage in a deep hole. The device includes a high-pressure and large-flow centralized liquid supply device, a while-drilling radar geological detection device, a deep hole adaptive directional drilling rig device, an electromagnetic transmission high-pressure sealing pipe column, and an open hole while-drilling segmented fracturing tool string. The high-pressure and large-flow centralized liquid supply device is provided with a double-pump structure, an outlet of the double-pump structure is connected to a drilling and fracturing dual-mode liquid supply switching structure, and the high-pressure and large-flow centralized liquid supply device is connected to the electromagnetic transmission high-pressure sealing pipe column. The electromagnetic transmission high-pressure sealing pipe column is configured to provide a fracturing fluid for the open hole while-drilling segmented fracturing tool string, and provide a drilling fluid for a screw motor of the deep hole adaptive directional drilling rig device. The while-drilling radar geological detection device is respectively connected to the open hole while-drilling segmented fracturing tool string and the screw motor of the deep hole adaptive directional drilling rig device, and transmits a signal via the electromagnetic transmission high-pressure sealing pipe column. The open hole while-drilling segmented fracturing tool string is provided with an electromagnetic transmission and communication structure for fracturing while drilling and a dual-mode differential pressure sliding sleeve, data is transmitted via the electromagnetic transmission and communication structure, and a drilling mode and a fracturing mode are switched via the dual-mode differential pressure sliding sleeve.

In some embodiments, the high-pressure and large-flow centralized liquid supply device is formed by connecting a water tank, the double-pump structure, the drilling and fracturing dual-mode liquid supply switching structure, a high pressure rubber tube, an orifice device and a remote controller in sequence.

In some embodiments, the dual-pump structure is provided with a high-pressure and small-flow pump group and a low-pressure and large-flow pump group, and the high-pressure and small-flow pump group and the low-pressure and large-flow pump group are jointly connected on a same chassis, and are jointly connected to the water tank and the remote controller.

In some embodiments, a one-way valve is provided inside the orifice device, a first end of the one-way valve is connected to the electromagnetic transmission high-pressure sealing pipe column in a threaded manner, and a second end of the one-way valve is connected to the high pressure rubber tube. A rotating water delivery structure is provided at the second end of the one-way valve connected to the high pressure rubber tube, and the one-way valve is configured to control a fluid to pass only from one side of the high pressure rubber tube to one side of the electromagnetic transmission high-pressure sealing pipe column, and a pressure gauge and a pressure relief valve are also provided at the one side of the electromagnetic transmission high-pressure sealing pipe column. When the high-pressure and large-flow centralized liquid supply device is configured for fracturing, a fracturing fluid is added into the water tank, and when the high-pressure and large-flow centralized liquid supply device is configured for drilling, a drilling fluid is added into the water tank.

In some embodiments, the deep hole adaptive directional drilling rig device includes a drill bit, a near-drill bit while-drilling measurement device, a screw motor and an adaptive directional drilling rig host.

In some embodiments, the near-drill bit while-drilling measurement device is configured to measure drilling trajectory parameters, meanwhile receive geological data information detected by the while-drilling radar geological detection device, and transmit data information to the adaptive directional drilling rig host via the electromagnetic transmission high-pressure sealing pipe column, and after data analysis and processing, a propelling force and a rotation speed are adaptively adjusted.

In some embodiments, the drill bit, the near-drill bit while-drilling measurement device and the screw motor are connected in sequence. The screw motor is connected to the while-drilling radar geological detection device. The adaptive directional drilling rig host is connected to the electromagnetic transmission high-pressure sealing pipe column, and is connected to the high-pressure and large-flow centralized liquid supply device via a high pressure rubber tube.

In some embodiments, the adaptive directional drilling rig host includes an anchoring cylinder group, an adaptive feeding device, a motor assembly, a fuel tank assembly, an adaptive power head, an explosion-proof computer and a crawler platform. The anchoring cylinder group, the adaptive feeding device, the motor assembly, the fuel tank assembly and the explosion-proof computer are all integrated on the crawler platform. The adaptive power head is located on the adaptive feeding device, and is configured to provide rotation power for directional drilling and accurately adjust a tool facing angle of the screw motor. The adaptive feeding device is configured to provide a propelling force required for drilling.

In some embodiments, the electromagnetic transmission high-pressure sealing pipe column has a center pipe-free structure and adopts an electromagnetic induction mode to perform signal transmission, and a pressure bearing capacity of a sealing structure is greater than a highest pressure of the high-pressure and large-flow centralized liquid supply device, and the signal transmission is not affected.

In some embodiments, the electromagnetic transmission high-pressure sealing pipe column is configured to transmit a drilling fluid for a screw motor in a drilling process, transmit a fracturing fluid for the open hole while-drilling segmented fracturing tool string in a fracturing process, transmit a drilling rig command signal in drilling and fracturing processes, and feed back detection result information of the while-drilling radar geological detection device and state information of a drill bit.

In some embodiments, the open hole while-drilling segmented fracturing tool string includes an upper conversion structure, an upper packer, an upper centralizer, a dual-mode differential pressure sliding sleeve screen pipe integrated nipple, a lower centralizer, a lower packer and a lower conversion structure. The upper conversion structure is connected to the while-drilling radar geological detection device, and the lower conversion structure is connected to the electromagnetic transmission high-pressure sealing pipe column. The upper conversion structure, the upper packer, the upper centralizer, the dual-mode differential pressure sliding sleeve screen pipe integrated nipple, the lower centralizer, the lower packer and the lower conversion structure are all provided with electromagnetic transmission structures. The dual-mode differential pressure sliding sleeve screen pipe integrated nipple includes a dual-mode differential pressure sliding sleeve and a screen pipe. The dual-mode differential pressure sliding sleeve is provided with a dual-mode structure of drilling and fracturing, and the screen pipe is configured for discharging high-pressure water.

In some embodiments, the dual-mode differential pressure sliding sleeve is configured to automatically switch the drilling mode and the fracturing mode by adjusting a liquid supply pressure of the high-pressure and large-flow centralized liquid supply device, and it is the drilling mode when the liquid supply pressure is $P_d$ or lower, and it is the fracturing mode when the liquid supply pressure is greater than $P_d$. $P_d$ is adjustable between 10 and 20 MPa.

In some embodiments, in the drilling mode, the high-pressure water does not enter the upper packer, the lower packer and the screen pipe, so as to avoid expansion of the upper packer and the lower packer and water discharge of the screen pipe, and the high-pressure water only enters the screw motor and is configured to provide power. In the fracturing mode, the high-pressure water does not enter the screw motor, the upper packer and the lower packer expand to seal a hole, and water from the screen pipe is subjected to segmented internal fracturing, when the pressure drops to $P_d$ or lower, the dual-mode differential pressure sliding sleeve closes the fracturing mode, the upper packer and the lower packer, and the upper packer and the lower packer are depressurized and contracted.

In some embodiments, the while-drilling radar geological detection device includes a transmitting conformal antenna array, a transmitter control circuit, a receiver control circuit, a radar signal processor, an MEMS acceleration sensor, and a receiving conformal antenna array.

In some embodiments, a signal processing process of the radar signal processor is as follows: after the transmitting conformal antenna array spirally scans all surrounding space, an intermittent radar reflection interface is formed, and a coal-rock interface at top and bottom of a mining face is extracted in a three-dimensional space, so as to provide layered boundaries for spatial subdivision. When a radar wave propagates in a coal seam, an amplitude decreases with increase of a propagation distance, and a phase shifts accordingly, and at a stratum interface, the radar wave is deflected and reflected. Based on an amplitude intensity and a phase shift of a reflected wave, coal seam attributes on a radar wave path are inversed by using tomography theory, and change information of the coal seam is characterized.

In some embodiments, a tetrahedral subdivision unit is adopted for subdividing the three-dimensional space, thereby dispersing an entire three-dimensional space. For a small-scale aperture constraint near a borehole, regional densification is performed. A subdivision size is increased in a detection edge area.

An embodiment of the present invention provides a method for regionalized coal mine gas drainage in a deep hole, which is applied to a device for regionalized coal mine gas drainage in a deep hole as described in any of the above embodiments. The method includes steps as follows.

In step 1, parameters of a geological environment, a stress state and physical mechanics of coal and rock strata are obtained. The parameters of the coal and rock strata include a coal seam firmness coefficient $f_1$, a roof firmness coefficient $f_2$, a segment strike length L, a segment dip length N, a coal seam thickness h, a coal and rock tensile strength $\sigma_t$, a coal seam buried depth H, a coal seam original horizontal maximum principal stress $\sigma_H$, a coal seam original horizontal minimum principal stress $\sigma_h$, a pore pressure $P_0$, a relative dielectric constant $\varepsilon_r$ of a underground medium, a water absorption coefficient $\lambda_2$ of the roof and floor rock strata.

In step 2, types of drainage boreholes and corresponding borehole parameters are designed according to obtained parameters of the coal and rock strata and design formulas.

In step 3, a propelling force and a rotation speed of the deep hole adaptive directional drilling rig device are adaptively adjusted by a deep hole adaptive directional drilling rig device according to the drainage borehole parameters set in step 2 and based on geological information detected continuously by a while-drilling radar geological detection device in real time in a drilling process, so as to perform construction of a long directional borehole parallel to the roof.

In step 4, a fracturing pressure $P_k$ of the coal seam, a pumping pressure $P_w$ of a fracturing pump and a fracturing water volume $V_{water}$ are calculated according to parameters of target coal and rock strata for fracturing.

In step 5, a fracturing segment length W and a fracture segment spacing U of the long directional borehole parallel to the roof are calculated.

In step 6, a hydraulic fracturing operation is performed with the parameters obtained in step 4 and step 5 as design parameters.

In step 7, water drainage is performed after fracturing, a hole is sealed, and a drainage device is connected for drainage.

In some embodiments, a design method of the types of drainage boreholes in step 2 is as follows. The types of drainage boreholes are divided into: a long directional borehole parallel to the roof and a long directional borehole parallel to the roof + a branch hole, assuming that a ratio of the roof firmness coefficient $f_2$ to the coal seam firmness coefficient $f_1$ is D, and D is calculated by:

$$D = \frac{f_2}{f_1}$$

where when D > 2, the long directional borehole parallel to the roof is used, and when D≤2, the long directional borehole parallel to the roof + the branch hole are used.

In some embodiments, a design method of the borehole parameters corresponding to the types of drainage boreholes in step 2 is as follows:

when the branch hole is constructed, a depth of a drill bit passing through the coal seam and entering the floor is x, where a value of x is 5 to 10m;
parameters of the long directional borehole parallel to the roof: a horizon of the long directional borehole parallel to the roof is located at M above the coal seam, a borehole length is K, a borehole spacing is P, a number of boreholes is B, and values of M, K, P and B are calculated as follows, where $\varepsilon=1m^2$:

$$M = 2h - f_2$$

$$K = L + 30$$

$$P = \frac{50}{M}\varepsilon$$

$$B = \frac{N - 60}{P}$$

parameters of the long directional borehole parallel to the roof + the branch hole: a horizon of the long directional borehole parallel to the roof is located at M above the coal seam, a borehole length is K, a borehole spacing is P, a number of main boreholes is B, a branch borehole spacing is O=P, and a number of branch holes is q, and q is calculated by:

$$q = \frac{K}{O}$$

In some embodiments, in step 3, the while-drilling radar geological detection device performs continuous detection in real time in the drilling process, and a specific process is as follows: when the while-drilling radar geological detection device performs detection, a receiver control circuit synchronizes a command from a transmitter control circuit, and senses a posture of the while-drilling radar geological detection device in real time via an MEMS acceleration sensor, and according to its own posture, the while-drilling radar geological detection device starts one or more groups of corresponding transmitting conformal antenna arrays and receiving conformal antenna arrays to perform detection data collection and data analysis, so as to reverse the geological information around a directional detection borehole. The while-drilling radar geological detection device transmits coal-rock interface information to the deep hole adaptive directional drilling rig device via the electromagnetic transmission high-pressure sealing pipe column, and the deep hole adaptive directional drilling rig device adjusts an orientation and inclination of the screw motor in real time according to the coal-rock interface information in the drilling process, so as to ensure a horizon of a borehole design.

In some embodiments, a formula for calculating a depth H of a target body at a coal-rock interface detected by the while-drilling radar geological detection device is as follows:

$$H = \frac{\sqrt{v^2 t^2 - x^2}}{2}$$

where v is a wave velocity of an electromagnetic wave in a medium; t is a travel time of the electromagnetic wave measured by a detection instrument; x is a distance between the transmitting conformal antenna array and the receiving conformal antenna array; a value of v can be directly measured by a wide angle method or calculated according to an approximate calculation formula:

$$v \approx \frac{c}{\sqrt{\varepsilon_r}}$$

where $c$ is a speed of light, and $\varepsilon_r$ is a relative dielectric constant of an underground medium; a formula for calculating a self-sensing direction of the while-drilling radar geological detection device is as follows:

$$\theta = \arcsin \frac{g_y}{\sqrt{g_y^2 + g_z^2}}$$

where $\theta$ is an angle between a main detection direction of the while-drilling radar geological detection device and a normal direction of the coal-rock interface; $g_y$ is an acceleration measurement value of a sensing shaft of the while-drilling radar geological detection device in an initial horizontal radial direction thereof; and $g_z$ is an acceleration measurement value of a sensing shaft of the while-drilling radar geological detection device in an initial vertical direction thereof.

In some embodiments, a formula for calculating the fracturing pressure $P_k$ of the coal seam in step 4 is as follows:

$$P_k = 3\sigma_h - \sigma_H + \sigma_t - P_0$$

where $\sigma_h$ is an original minimum principal stress of the coal seam in a horizontal direction, $\sigma_H$ is an original maximum principal stress of the coal seam in the horizontal direction, $\sigma_t$ is a tensile strength of the coal and rock, and $P_0$ is a pore pressure;
a required pumping pressure $P_w$ of the fracturing pump is calculated, and a formula for calculating the $P_w$ is as follows:

$$P_w = P_k + P_H + P_r$$

where $P_H$ is a pressure of a fracturing pipeline liquid column, $P_H = \rho g H_c$; $\rho$ is a density of a fracturing fluid; g is a gravity acceleration, $H_c$ is a height difference of the electromagnetic transmission high-pressure sealing pipe column, and it is an elevation of a final hole of a borehole minus an elevation of an opening; $P_r$ is friction resistance along a fracturing fluid, $P_r = aL_g\lambda_1$, $L_g$ is a pipeline length, $\lambda_1$ is a friction resistance coefficient, a=1MPa/km;
according to borehole spacing parameters designed for fracturing the target coal and rock strata and considering pressure water leakage, the fracturing water volume $V_{water}$ is estimated,
a formula for calculating the $V_{water}$ is as follows:

$$V_{water} = 0.02 V_{body} \lambda 2$$

where $V_{body}$ is a volume of the coal seam in a designed fracturing influence range; $\lambda_2$ is a water absorption coefficient of the roof and floor rock strata, and is valued according to the roof firmness coefficient $f_2$: when $f_2 > 2$, $\lambda_2$ is 1, and when $f_2$ is other values, $\lambda_2 = 1.7 - 0.35 f_2$.

In some embodiments, in step 5, the fracturing segment length W and the fracturing segment spacing U of the long directional borehole parallel to the roof are calculated by:

$$W = \sqrt{\frac{50}{M}} \beta$$

$$U = \sqrt{\frac{50}{M}} \frac{f_2}{f_1} h\beta$$

where $f_1$ is a coal seam firmness coefficient, $f_2$ is a roof firmness coefficient, M is a distance from a directional long borehole to the coal seam, h is a thickness of the coal seam, and $\beta = 1m^{3/2}$.

In some embodiments, in step 6, the hydraulic fracturing operation is performed according to the design parameters, and for a fracturing operation while drilling with the long directional borehole parallel to the roof, specific steps are as follows. Before drilling construction by using the device for regionalized coal mine gas drainage in the deep hole, a dual-mode differential pressure sliding sleeve screen pipe integrated nipple is adjusted to control a spacing between an upper packer and a lower packer to the fracturing segment length W of the long directional borehole parallel to the roof. After completion of the long directional borehole parallel to the roof, according to design of segmented hydraulic fracturing parameters, a high-pressure and large-flow centralized liquid supply device is started and controlled to start fracturing, a fracturing pressure is adjusted to be higher than the pumping pressure $P_w$ of the fracturing pump, and first segment fracturing at a bottom of a hole is stopped when the fracturing water volume $V_{water}$ is completed. An electromagnetic transmission high-pressure sealing pipe column is dragged to drive an open hole while-drilling segmented fracturing tool string, so that a distance between the upper packer and the lower packer of the first segment fracturing is the fracturing segment spacing U for second segment fracturing, above steps are repeated until all segment fracturing is completed.

In some embodiments, in step 6, the hydraulic fracturing operation is performed according to the design parameters, and for a fracturing operation while drilling with the long directional borehole parallel to the roof and the branch hole, specific steps are as follows. Before drilling construction by using the device for regionalized coal mine gas drainage in the deep hole, a dual-mode differential pressure sliding sleeve screen pipe integrated nipple is adjusted to control a spacing between an upper packer and a lower packer, so that the spacing is greater than a length of a borehole in a coal seam segment. After the long directional borehole parallel to the roof is completed, construction of a first branch hole is started at bottom of a hole, and after the construction is completed, positions of the upper packer and the lower packer are adjusted so that they are respectively located at a floor of the coal seam and a roof of the coal seam. According to design of segmented hydraulic fracturing parameters, a high-pressure and large-flow centralized liquid supply device is started and controlled to start fracturing, the fracturing pressure is adjusted to be higher than the pumping pressure $P_w$ of the fracturing pump, and fracturing of the first branch hole is stopped when the fracturing water volume $V_{water}$ is completed. The electromagnetic transmission high-pressure sealing pipe column is dragged so that a drill bit is at an opening point of a second branch hole, and a distance between a second opening point and a first opening point is O, drilling of the second branch hole is started and fracturing while drilling is performed, and above steps are repeated until fracturing of all branch holes is completed.

In some embodiments, in step 7, when the water drainage is performed after fracturing, a temporary negative pressure device is installed at a borehole orifice and is configure to suck out a positive pressure gas in a water drainage process to prevent a gas inside a drilling field from exceeding a limit, when a water drainage flow is less than $V_P$, a cement mortar is adopted to seal the hole, where $V_P$ is taken within a range of 0.2 to 0.5m$^3$/h, and after the hole is sealed, the drainage device is connected for drainage.

The present invention provides the device for regionalized coal mine gas drainage in the deep hole and the method for regionalized coal mine gas drainage in the deep hole, which has a simple structure and is easy to operate. The high-pressure and large-flow centralized liquid supply device and the electromagnetic transmission high-pressure sealing pipe column are used in common during drilling and fracturing. The while-drilling radar geological detection device does not need to be drilled out before detection. A detection result directly guides a drilling process, and the drilling process can be operated autonomously. The open hole segmented fracturing tool string can be operated while drilling, so as to implement advanced and highly-efficient drainage of gas in a large area of an underground roadway-free coal mine dominated by a soft coal seam.

## BRIEF DESCRIPTION OF THE DRAWINGS

FIG. 1 is a flow chart showing regionalized coal mine gas drainage in a deep hole according to the present invention.
FIG. 2 is a schematic perspective view illustrating an arrangement of a borehole for regionalized coal mine gas drainage in a deep hole according to the present invention.
FIG. 3 is an overall schematic diagram illustrating a device for regionalized coal mine gas drainage in a deep hole according to the present invention.

FIG. 4 is a schematic diagram illustrating a while-drilling radar geological detection device according to the present invention.
FIG. 5 is a schematic diagram illustrating an adaptive directional drilling rig host according to the present invention.
FIG. 6 is a schematic diagram illustrating an open hole while-drilling segmented fracturing tool string according to the present invention.

Reference numeral: a drill bit 1; a near-drill bit while-drilling measurement device 2; a screw motor 3; a while-drilling radar geological detection device 4; a transmitting conformal antenna array 401; a transmitter control circuit 402; a receiver control circuit 403; a radar signal processor 404; an MEMS acceleration sensor 405; a receiving conformal antenna array 406; a coal-rock interface I 407; a coal-rock interface II 408; an electromagnetic transmission high-pressure sealing pipe column 5; an adaptive directional drilling rig host 6; an anchoring cylinder group 601; an adaptive feeding device 602; a motor assembly 603; a fuel tank assembly 604; an adaptive power head 605; an explosion-proof computer 606; a crawler platform 607; a water tank 701; a double-pump structure 702; a drilling and fracturing dual-mode liquid supply switching structure 703; a high pressure rubber tube 704; an orifice device 705; a remote controller 706; an upper conversion structure 801; an upper packer 802; an upper centralizer 803; a dual-mode differential pressure sliding sleeve screen pipe integrated nipple 804; a lower centralizer 805; a lower packer 806; a lower conversion structure 807.

## DETAILED DESCRIPTION

Embodiments of the present invention are described in detail below, examples of which are illustrated in the accompanying drawings. The embodiments described below with reference to the accompanying drawings are illustrative, and are intended to explain the present invention and cannot be construed as limiting the present invention.

The following is an explanation of embodiments of the present invention by specific examples, and those skilled in the art can easily understand other advantages and effects of the present invention from contents disclosed in this specification. The present invention can also be implemented or applied through other different specific embodiments, and various details in this specification can be modified or changed based on different viewpoints and applications without departing from the spirit of the present invention. It is to be noted that illustrations provided in following embodiments are only schematic illustrations of the basic concept of the present invention, and the following embodiments and features in the embodiments can be combined with each other without conflict.

Accompanying drawings are only used for illustrative purposes, and they only represent schematic diagrams, rather than actual pictures, and cannot be understood as limitations on the present invention. In order to better illustrate the embodiments of the present invention, some components in the accompanying drawings may be omitted, enlarged or reduced, which do not represent a size of an actual product. It is understandable for those skilled in the art that some well-known structures in the accompanying drawings and their descriptions may be omitted.

The same or similar numbers in the accompanying drawings of the embodiments of the present invention represent same or similar components. In the description of the present invention, it is to be noted that, the orientation or positional relationship indicated by terms such as "upper," "lower," "left," "right," "front," and "rear," is based on the orientation or positional relationship shown in the accompanying drawings, which is only for the convenience of describing the present invention and simplifying the description, and is not intended to indicate or imply that the device or element being referred to must have a particular orientation, be constructed and operated in a specific orientation. Therefore, the terms describing the position relationship in the accompanying drawings are only used for illustrative purposes and cannot be understood as a limitation on the present invention. Specific meanings of the above-mentioned terms can be understood by those ordinarily skilled in the art according to specific situations.

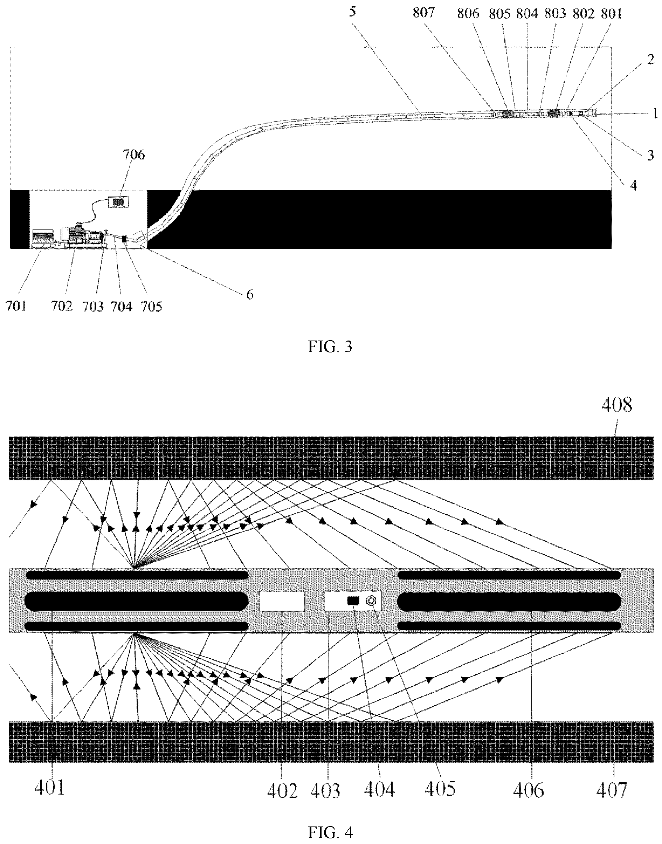

FIGS. 3 to 6 are an overall schematic diagram illustrating a device for regionalized coal mine gas drainage in a deep hole and schematic diagrams illustrating various component parts according to the present invention. Specifically, a device for regionalized coal mine gas drainage in a deep hole includes a high-pressure and large-flow centralized liquid supply device, a while-drilling radar geological detection device 4, a deep hole adaptive directional drilling rig device, an electromagnetic transmission high-pressure sealing pipe column 5, and an open hole while-drilling segmented fracturing tool string.

Referring to FIG. 3, the high-pressure and large-flow centralized liquid supply device is formed by connecting a water tank 701, the double-pump structure 702, the drilling and fracturing dual-mode liquid supply switching structure 703, a high pressure rubber tube 704, an orifice device 705 and a remote controller 706 in sequence. The dual-pump structure 702 is provided with a high-pressure and small-flow pump group and a low-pressure and large-flow pump group, and the high-pressure and small-flow pump group and the low-pressure and large-flow pump group are jointly connected on a same chassis, and are jointly connected to the water tank 701 and the remote controller 706. The dual-pump structure 702 is provided with a high-pressure and small-flow pump group and a low-pressure and large-flow pump group, and the high-pressure and small-flow pump group and the low-pressure and large-flow pump group are jointly connected on a same chassis, and are jointly connected to the water tank 701 and the remote controller 706. A one-way valve is provided inside the orifice device 705, a first end of the one-way valve is connected to the electromagnetic transmission high-pressure sealing pipe column 5 in a threaded manner, and a second end of the one-way valve is connected to the high pressure rubber tube 704. A rotating water delivery structure is provided at the second end of the one-way valve connected to the high pressure rubber tube 704, and the one-way valve is configured to control a fluid to pass only from one side of the high pressure rubber tube 704 to one side of the electromagnetic transmission high-pressure sealing pipe column 5, and a pressure gauge and a pressure relief valve are also provided at the one side of the electromagnetic transmission high-pressure sealing pipe column 5. When the high-pressure and large-flow centralized liquid supply device is configured for fracturing, a fracturing fluid is added into the water tank 701, and when the high-pressure and large-flow centralized liquid supply device is configured for drilling, a drilling fluid is added into the water tank 701.

Referring to FIG. 3, the deep hole adaptive directional drilling rig device includes a drill bit 1, a near-drill bit while-drilling measurement device 2, a screw motor 3 and an adaptive directional drilling rig host 6. The drill bit 1, the near-drill bit while-drilling measurement device 2 and the screw motor 3 are connected in sequence. The screw motor 3 is connected to the while-drilling radar geological detection device 4. The adaptive directional drilling rig host 6 is connected to the electromagnetic transmission high-pressure sealing pipe column 5, and is connected to the high-pressure and large-flow centralized liquid supply device via a high pressure rubber tube 704. The near-drill bit while-drilling measurement device 2 is configured to measure drilling trajectory parameters, meanwhile receive geological data information detected by the while-drilling radar geological detection device 4, and transmit data information to the adaptive directional drilling rig host 6 via the electromagnetic transmission high-pressure sealing pipe column 5, and after data analysis and processing, a propelling force and a rotation speed are adaptively adjusted.

Referring to FIG. 3, the electromagnetic transmission high-pressure sealing pipe column 5 has a center pipe-free structure and adopts an electromagnetic induction mode to perform signal transmission. A pressure bearing capacity of a sealing structure is greater than a highest pressure of the high-pressure and large-flow centralized liquid supply device, and the signal transmission is not affected. The electromagnetic transmission high-pressure sealing pipe column 5 is configured to transmit a drilling fluid for a screw motor 3 in a drilling process, transmit a fracturing fluid for the open hole while-drilling segmented fracturing tool string in a fracturing process, transmit a drilling rig command signal in drilling and fracturing processes, and feed back detection result information of the while-drilling radar geological detection device 4 and state information of a drill bit 1. The high-pressure and large-flow centralized liquid supply device is connected to the drilling and fracturing dual-mode liquid supply switching structure 703 at an outlet of the double-pump structure 702, and is connected to the electromagnetic transmission high-pressure sealing pipe column 5 via the orifice device 705. The while-drilling radar geological detection device is respectively connected to the open hole while-drilling segmented fracturing tool string and the screw motor 3 of the deep hole adaptive directional drilling rig device, and transmits a signal via the electromagnetic transmission high-pressure sealing pipe column 5.

Referring to FIGS. 3 and 4, the while-drilling radar geological detection device 4 includes a transmitting conformal antenna array 401, a transmitter control circuit 402, a receiver control circuit 403, a radar signal processor 404, an MEMS acceleration sensor 405, and a receiving conformal antenna array 406. A signal processing process of the radar signal processor 404 is as follows: after the transmitting conformal antenna array 401 spirally scans all surrounding space, an intermittent radar reflection interface is formed, and a coal-rock interface at top and bottom of a mining face is extracted in a three-dimensional space, so as to provide layered boundaries for spatial subdivision. When a radar wave propagates in a coal seam, an amplitude decreases with increase of a propagation distance, and a phase shifts accordingly, and at a stratum interface, the radar wave is deflected and reflected. Based on an amplitude intensity and a phase shift of a reflected wave, coal seam attributes on a radar wave path are inversed by using tomography theory, and change information of the coal seam is characterized. A tetrahedral subdivision unit is adopted for subdividing the three-dimensional space, thereby dispersing an entire three-dimensional space. For a small-scale aperture constraint near a borehole, regional densification is performed. A subdivision size is increased in a detection edge area.

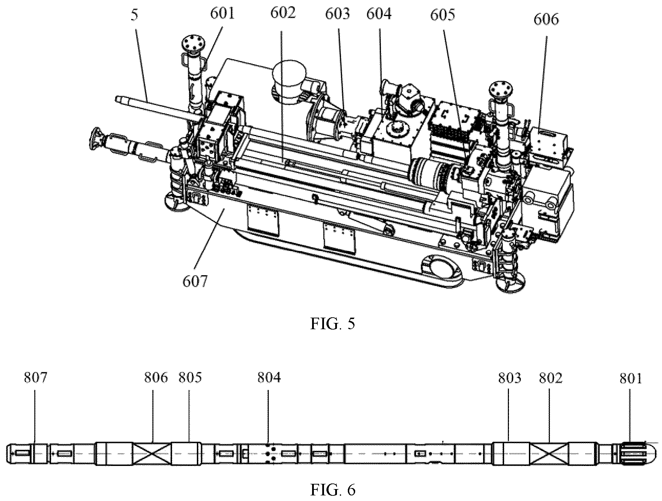

Referring to FIGS. 3 and 5, the adaptive directional drilling rig host 6 is configured to provide a propelling force and rotation power for directional drilling. The adaptive directional drilling rig host 6 includes an anchoring cylinder group 601, an adaptive feeding device 602, a motor assembly 603, a fuel tank assembly 604, an adaptive power head 605, an explosion-proof computer 606 and a crawler platform 607. The anchoring cylinder group 601, the adaptive feeding device 602, the motor assembly 603, the fuel tank assembly 604 and the explosion-proof computer 606 are all integrated on the crawler platform 607. The adaptive power head 605 is located on the adaptive feeding device 602, and is configured to provide rotation power for directional drilling and accurately adjust a tool facing angle of the screw motor 3. The adaptive feeding device 602 is configured to provide a propelling force required for drilling.

Referring to FIGS. 3 and 6, the open hole while-drilling segmented fracturing tool string includes an upper conversion structure 801, an upper packer 802, an upper centralizer 803, a dual-mode differential pressure sliding sleeve screen pipe integrated nipple 804, a lower centralizer 805, a lower packer 806 and a lower conversion structure 807. The above-mentioned components are connected in sequence in a threaded manner. The upper conversion structure 801 is connected to the while-drilling radar geological detection device 4, and the lower conversion structure 807 is connected to the electromagnetic transmission high-pressure sealing pipe column 5. The upper conversion structure 801, the upper packer 802, the upper centralizer 803, the dual-mode differential pressure sliding sleeve screen pipe integrated nipple 804, the lower centralizer 805, the lower packer 806 and the lower conversion structure 807 are all provided with electromagnetic transmission structures. The dual-mode differential pressure sliding sleeve screen pipe integrated nipple 804 includes a dual-mode differential pressure sliding sleeve and a screen pipe. The dual-mode differential pressure sliding sleeve is provided with a dual-mode structure of drilling and fracturing, and the screen pipe is configured for discharging high-pressure water. The dual-mode differential pressure sliding sleeve is configured to automatically switch the drilling mode and the fracturing mode by adjusting a liquid supply pressure of the high-pressure and large-flow centralized liquid supply device. It is the drilling mode when the liquid supply pressure is $P_d$ or lower, and it is the fracturing mode when the liquid supply pressure is greater than $P_d$. $P_d$ is adjustable between 10 and 20 MPa. In the drilling mode, the high-pressure water does not enter the upper packer 802, the lower packer 806 and the screen pipe, so as to avoid expansion of the upper packer 802 and the lower packer 806 and water discharge of the screen pipe, and the high-pressure water only enters the screw motor 3 and is configured to provide power. In the fracturing mode, the high-pressure water does not enter the screw motor 3, the upper packer 802 and the lower packer 806 expand to seal a hole, and water from the screen pipe is subjected to segmented internal fracturing, when the pressure drops to $P_d$ or lower, the dual-mode differential pressure sliding sleeve closes the fracturing mode, the upper packer 802 and the lower packer 806, and the upper packer 802 and the lower packer 806 are depressurized and contracted. The open hole while-drilling segmented fracturing tool string is further provided with an electromagnetic transmission and communication structure for fracturing while drilling, and data is transmitted via the electromagnetic transmission and communication structure.

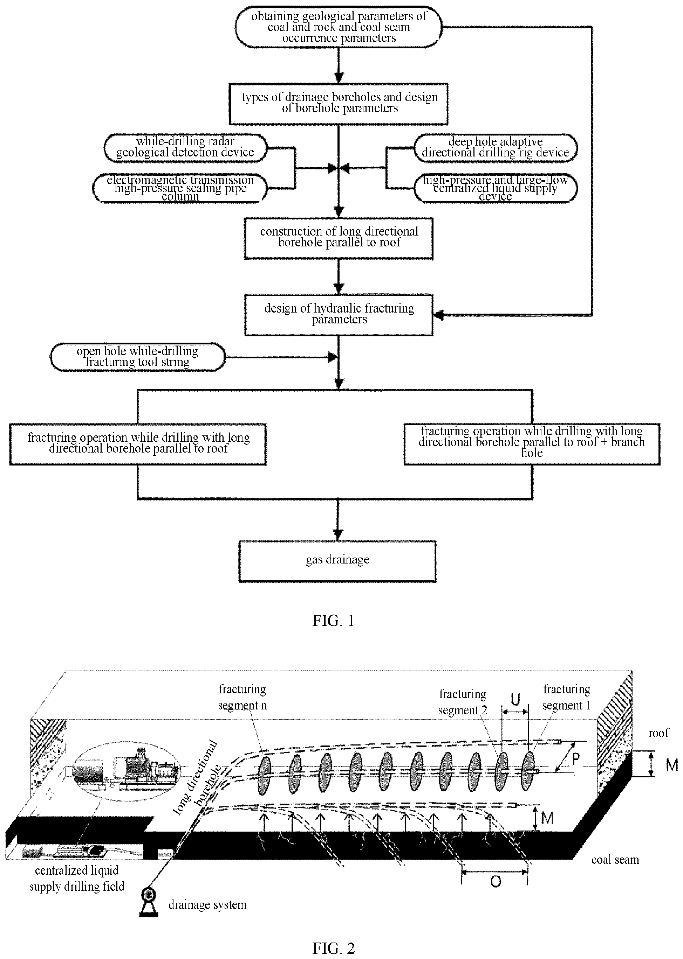

In conjunction with FIGS. 1 to 2, a method for regionalized coal mine gas drainage in a deep hole provided in the present invention is explained, which is applied to a device for regionalized coal mine gas drainage in a deep hole shown in FIGS. 3 to 6. A method for regionalized coal mine gas drainage in a deep hole provided in Example 1 includes steps as follows.

In step 1, parameters of a geological environment, a stress state, physical mechanics and the like of coal and rock strata are obtained. Assuming that an obtained coal seam firmness coefficient $f_1$=0.5, a roof firmness coefficient $f_2$=2, a segment strike length L=1200m, a segment dip length N=600m, a coal seam thickness h=2m, a coal and rock tensile strength $\sigma_t$=1.2MPa, a coal seam buried depth H=600m, a coal seam original horizontal maximum principal stress $\sigma_H$=24MPa, a coal seam original horizontal minimum principal stress $\sigma_h$=15MPa, a pore pressure $P_0$=0.5MPa, a relative dielectric constant $\varepsilon_r$ of a underground medium=6, and a water absorption coefficient $\lambda_2$ of the roof and floor rock strata=0.25.

In step 2, types of drainage boreholes and corresponding borehole parameters are designed according to obtained parameters of the coal and rock strata and according to a method as follows.

Division of types of drainage boreholes: the types of drainage boreholes are divided into a long directional borehole parallel to the roof and a long directional borehole parallel to the roof + a branch hole. Assuming that a ratio of the roof firmness coefficient to the coal seam firmness coefficient is D, and a value of D is a dimensionless parameter, and a magnitude of D represents a possibility that the roof may extend a fracture into the coal seam by hydraulic fracturing. According to the possibility, it is determined whether to design the branch hole, and D is calculated by:

$$D = \frac{f_2}{f_1}$$

where $f_1$ represents the coal seam firmness coefficient, $f_2$ represents the roof firmness coefficient, and after calculation, D=4. When D > 2, the long directional borehole parallel to the roof is used, and when D≤2, the long directional borehole parallel to the roof + the branch hole are used. In this Example, since the calculated D > 2, a type of drainage borehole used is the long directional borehole parallel to the roof.

A horizon of the long directional borehole parallel to the roof is designed at M above the coal seam, a borehole length is K, a borehole spacing is P, a number of boreholes is B, and values of M, K, P and B are respectively calculated as follows, where $\varepsilon$=1m$^2$.

$$M = 2h - f_2$$

$$K = L + 30$$

$$P = \frac{50}{M}\varepsilon$$

$$B = \frac{N - 60}{P}$$

after calculation, M=2m, K=1230m, P=25m and B=21.6.

In step 3, the deep hole adaptive directional drilling rig device adaptively adjusts a propelling force, a rotation speed and the like of the deep hole adaptive directional drilling rig device according to the drainage borehole design parameters in step 2 and based on geological information detected continuously by a while-drilling radar geological detection device in real time in a drilling process, so as to improve a drilling efficiency, and reduce a probability of drill jamming and bit balling in the drilling process. A drilling trajectory at M=2m above the coal seam is always kept to perform construction of the long directional borehole parallel to the roof.

When the while-drilling radar geological detection device 4 performs detection in real time, a receiver control circuit 403 synchronizes a command from a transmitter control circuit 402, and senses a posture of the while-drilling radar geological detection device in real time via an MEMS acceleration sensor 405, and according to its own posture, the while-drilling radar geological detection device 4 starts one or more groups of corresponding transmitting conformal antenna arrays 401 and receiving conformal antenna arrays 406 to perform detection data collection and data analysis, so as to reverse the geological information around a directional detection borehole. The while-drilling radar geological detection device 4 transmits coal-rock interface information to the deep hole adaptive directional drilling rig device via the electromagnetic transmission high-pressure sealing pipe column 5, and the deep hole adaptive directional drilling rig device adjusts an orientation and inclination of the screw motor 3 in real time according to the coal-rock interface information in the drilling process, so as to ensure a horizon of a borehole design.

A formula for calculating a depth H of a target body at a coal-rock interface detected by the while-drilling radar geological detection device 4 is as follows:

$$H = \frac{\sqrt{v^2 t^2 - x^2}}{2}$$

where v is a wave velocity of an electromagnetic wave in a medium; *t* is a travel time of the electromagnetic wave measured by a detection instrument; *x* is a distance between the transmitting conformal antenna array 401 and the receiving conformal antenna array 406; a value of *v* can be directly measured by a wide angle method or can be calculated according to an approximate calculation formula:

$$v \approx \frac{c}{\sqrt{\varepsilon_r}}$$

where c is a speed of light, and $\varepsilon_r$ is a relative di-

electric constant of an underground medium.

A formula for calculating a self-sensing direction of the while-drilling radar geological detection device 4 is as follows:

$$\theta = \arcsin \frac{g_y}{\sqrt{g_y^2 + g_z^2}}$$

where $\theta$ is an angle between a main detection direction of the while-drilling radar geological detection device 4 and a normal direction of the coal-rock interface; $g_y$ is an acceleration measurement value of a sensing shaft of the while-drilling radar geological detection device 4 in an initial horizontal radial direction thereof; and $g_z$ is an acceleration measurement value of a sensing shaft of the while-drilling radar geological detection device 4 in an initial vertical direction thereof.

In step 4, according to parameters of a geological environment, a stress state, physical mechanics and the like of target coal and rock strata for fracturing, a fracturing pressure $P_k$ of the coal seam, a pumping pressure $P_w$ of a fracturing pump and a fracturing water volume $V_{water}$ are calculated, so as to provide data for a subsequent segmented fracturing operation while drilling.

A formula for calculating the fracturing pressure $P_k$ of the coal seam is as follows:

$$P_k = 3\sigma_h - \sigma_H + \sigma_t - P_0$$

where $\sigma_h$ is an original minimum principal stress of the coal seam in a horizontal direction, $\sigma_H$ is an original maximum principal stress of the coal seam in the horizontal direction, $\sigma_t$ is a tensile strength of the coal and rock, and $P_0$ is a pore pressure. After calculation, the fracturing pressure $P_k$ of the coal seam is 21.7MPa.

A required pumping pressure $P_w$ of the fracturing pump is calculated according to a calculated value of $P_k$ and other parameters, and a formula for calculating the $P_w$ is as follows:

$$P_w = P_k + P_H + P_r$$

where $P_H$ is a pressure of a fracturing pipeline liquid column, $P_H = \rho g H_c$; $\rho$ is a density of a fracturing fluid, this time it is assumed that clean water is taken as the fracturing fluid, and $\rho = 1000$ kg/m$^3$; g is a gravity acceleration and g=10N/kg; $H_c$ is a height difference of the electromagnetic transmission high-pressure sealing pipe column, according to an empirical opening height of 1m, combined with the coal seam thickness and a value of the horizon of the borehole, an elevation of a final hole of a borehole minus an elevation of an opening is calculated to obtain $H_c = 3$m, and after calculation, $P_H = 0.03$MPa; $P_r$ is friction resistance along a fracturing fluid, $P_r = aL_g\lambda_1$, $L_g$

is a pipeline length, assuming that $L_g$ is 0.1km, $\lambda_1$ is a friction resistance coefficient, assuming that a friction resistance coefficient $\lambda_1$ of a pipeline is 8, a=1MPa/km, and after calculation, $P_r = 0.8$MPa. After calculation, the pumping pressure $P_w$ of the fracturing pump is 22.53MPa.

According to parameters such as a borehole spacing designed for fracturing the target coal and rock strata and considering pressure water leakage, the fracturing water volume $V_{water}$ is estimated.

A formula for calculating the $V_{water}$ is as follows:

$$V_{water} = 0.02 V_{body} \lambda 2$$

where $V_{body}$ is a volume of the coal seam in a designed fracturing influence range, and according to borehole spacing segmentation parameters and the like, an estimated volume of the coal seam is about 2250m$^3$; $\lambda_2$ is a water absorption coefficient of the roof and floor rock strata, and is valued according to the roof rock strata firmness coefficient $f_2$: when $f_2 > 2$, $\lambda_2$ is 1, and when $f_2$ is other values, $\lambda_2 = 1.7 - 0.35 f_2$. After calculation, $V_{water} = 45$m$^3$.

In step 5, a fracturing segment length W and a fracture segment spacing U of the long directional borehole parallel to the roof are calculated.

The fracturing segment length W and the fracturing segment spacing U of the long directional borehole parallel to the roof are calculated by:

$$W = \sqrt{\frac{50}{M}}\beta$$

$$U = \sqrt{\frac{50}{M}}\frac{f_2}{f_1}h\beta$$

where $f_1$ is a coal seam firmness coefficient, $f_2$ is a roof firmness coefficient, M is a distance from a directional long borehole to the coal seam, h is a thickness of the coal seam, and $\beta = 1$m$^{3/2}$. After calculation, for the long directional borehole parallel to the roof, the fracturing segment length W=5m, and the fracturing segment spacing U=40m.

In step 6, a hydraulic fracturing operation is performed according to the above-mentioned design parameters.

A fracturing operation while drilling with the long directional borehole parallel to the roof: before drilling construction by using a whole set of device for regionalized coal mine gas drainage in the deep hole, a dual-mode differential pressure sliding sleeve screen pipe integrated nipple 804 is adjusted to control a spacing between an upper packer 802 and a lower packer 806 to W=5m. After completion of the long directional borehole parallel to the roof, according to design of segmented hydraulic fracturing parameters, a high-pressure and large-flow centralized liquid supply device is started and controlled to start fracturing, a fracturing pressure is adjusted to be higher than the pumping pressure $P_w$ of the fracturing pump being 22.53MPa, first segment fracturing at a bottom of a hole is stopped when the fracturing water volume $V_{water}$ =45m³ is completed, and an electromagnetic transmission high-pressure sealing pipe column 5 is dragged to drive an open hole while-drilling segmented fracturing tool string, so that a distance between the upper packer and the lower packer of the first segment fracturing is the fracturing segment spacing U=40m for second segment fracturing, above steps are repeated until all segment fracturing is completed.

In step 7, water drainage is performed after fracturing, a hole is sealed, and a drainage device is connected for drainage. When the water drainage is performed after fracturing, a temporary negative pressure device is installed at an orifice and is configure to suck out a positive pressure gas in a water drainage process to prevent a gas inside a drilling field from exceeding a limit. When a water drainage flow is less than $V_P$, a cement mortar is adopted to seal the hole, where $V_P$ is taken within a range of 0.2 to 0.5m³/h. After the hole is sealed, the drainage device is connected for drainage. The water drainage is performed after fracturing, the hole is sealed, and the drainage device is connected for drainage.

A method for regionalized coal mine gas drainage in a deep hole provided in Example 2 includes steps as follows.

In step 1, parameters of a geological environment, a stress state, physical mechanics and the like of coal and rock strata are obtained. Assuming that an obtained coal seam firmness coefficient $f_1$=1.5, a roof firmness coefficient $f_2$=2.4, a segment strike length L=1200m, a segment dip length N=600m, a coal seam thickness h=2m, a coal and rock tensile strength $\sigma_t$=1.2MPa, a coal seam buried depth H=600m, a coal seam original horizontal maximum principal stress $\sigma_H$=24MPa, a coal seam original horizontal minimum principal stress $\sigma_h$=15MPa, a pore pressure $P_0$=0.5MPa, a relative dielectric constant $\varepsilon_r$ of a underground medium=6, and a water absorption coefficient $\lambda_2$ of the roof and floor rock strata=0.25.

In step 2, types of drainage boreholes and corresponding borehole parameters are designed according to obtained parameters of the coal and rock strata and according to a method as follows.

Division of types of drainage boreholes: the types of drainage boreholes are divided into a long directional borehole parallel to the roof and a long directional borehole parallel to the roof + a branch hole. Assuming that a ratio of the roof firmness coefficient to the coal seam firmness coefficient is D, and a value of D is a dimensionless parameter, and a magnitude of D represents a possibility that the roof may extend a fracture into the coal seam by hydraulic fracturing. According to the possibility, it is determined whether to design the branch hole, and D is calculated by:

$$D=\frac{f_2}{f_1}$$

where $f_1$ represents the coal seam firmness coefficient, $f_2$ represents the roof firmness coefficient, and after calculation, D=1.6. When D > 2, the long directional borehole parallel to the roof is used, and when D≤2, the long directional borehole parallel to the roof + the branch hole are used. In this Example, since the calculated D is less than 2, a type of drainage borehole used is the long directional borehole parallel to the roof + the branch hole.

A horizon of the long directional borehole parallel to the roof is designed at M above the coal seam, a borehole length is K, a borehole spacing is P, a number of boreholes is B, and values of M, K, P and B are respectively calculated as follows, where $\varepsilon$=1m².

$$M=2h-f_2$$

$$K=L+30$$

$$P=\frac{50}{M}\varepsilon$$

$$B=\frac{N-60}{P}$$

after calculation, M=1.6m, K=1230m, P=31.25m and B=17.28.

Parameters of the long directional borehole parallel to the roof + the branch hole: a horizon of the long directional borehole parallel to the roof is located at M above the coal seam, a borehole length is K, a borehole spacing is P, a number of boreholes is B, a branch borehole spacing is O=P=31.25m, and a number of branch holes is q, and q is calculated by:

$$q=\frac{K}{O}$$

after calculation, q=39.36m.

In step 3, the deep hole adaptive directional drilling rig device adaptively adjusts a propelling force, a rotation speed and the like of the deep hole adaptive directional drilling rig device according to the drainage borehole design parameters in step 2 and based on geological information detected continuously by a while-drilling radar geological detection device in real time in a drilling process, so as to improve a drilling efficiency, and reduce a probability of drill jamming and bit balling in the drilling process. A drilling trajectory at M=1.6m above the coal seam is always kept to perform construction of the long directional borehole parallel to the roof.

When the while-drilling radar geological detection device 4 performs detection in real time, a receiver control circuit 403 synchronizes a command from a transmitter control circuit 402, and senses a posture of the while-drilling radar geological detection device in real time via an MEMS acceleration sensor 405, and according to its own posture, the while-drilling radar geological detection device 4 starts one or more groups of corresponding transmitting conformal antenna arrays 401 and receiving conformal antenna arrays 406 to perform detection data collection and data analysis, so as to reverse the geological information around a directional detection borehole. The while-drilling radar geological detection device 4 transmits coal-rock interface information to the deep hole adaptive directional drilling rig device via the electromagnetic transmission high-pressure sealing pipe column 5, and the deep hole adaptive directional drilling rig device adjusts an orientation and inclination of the screw motor 3 in real time according to the coal-rock interface information in the drilling process, so as to ensure a horizon of a borehole design.

A formula for calculating a depth H of a target body at a coal-rock interface detected by the while-drilling radar geological detection device 4 is as follows:

$$H = \frac{\sqrt{v^2 t^2 - x^2}}{2}$$

where v is a wave velocity of an electromagnetic wave in a medium; t is a travel time of the electromagnetic wave measured by a detection instrument; x is a distance between the transmitting conformal antenna array 401 and the receiving conformal antenna array 406; a value of v can be directly measured by a wide angle method or can be calculated according to an approximate calculation formula:

$$v \approx \frac{c}{\sqrt{\varepsilon_r}}$$

where c is a speed of light, and $\varepsilon_r$ is a relative dielectric constant of an underground medium.

A formula for calculating a self-sensing direction of the while-drilling radar geological detection device 4 is as follows:

$$\theta = \arcsin \frac{g_y}{\sqrt{g_y^2 + g_z^2}}$$

where $\theta$ is an angle between a main detection direction of the while-drilling radar geological detection device 4 and a normal direction of the coal-rock interface; $g_y$ is an acceleration measurement value of a sensing shaft of the while-drilling radar geological detection device 4 in an initial horizontal radial direction thereof; and $g_z$ is an acceleration measurement value of a sensing shaft of the while-drilling radar geological detection device 4 in an initial vertical direction thereof.

In step 4, according to parameters of a geological environment, a stress state, physical mechanics and the like of target coal and rock strata for fracturing, a fracturing pressure $P_k$ of the coal seam, a pumping pressure $P_w$ of a fracturing pump and a fracturing water volume $V_{water}$ are calculated, so as to provide data for a subsequent segmented fracturing operation while drilling.

A formula for calculating the fracturing pressure $P_k$ of the coal seam is as follows:

$$P_k = 3\sigma_h - \sigma_H + \sigma_t - P_0$$

where $\sigma_h$ is an original minimum principal stress of the coal seam in a horizontal direction, $\sigma_H$ is an original maximum principal stress of the coal seam in the horizontal direction, $\sigma_t$ is a tensile strength of the coal and rock, and $P_0$ is a pore pressure. After calculation, the fracturing pressure $P_k$ of the coal seam is 21.7MPa.

A required pumping pressure $P_w$ of the fracturing pump is calculated according to a calculated value of $P_k$ and other parameters, and a formula for calculating the $P_w$ is as follows:

$$P_w = P_k + P_H + P_r$$

where $P_H$ is a pressure of a fracturing pipeline liquid column, $P_H = \rho g H_c$; $\rho$ is a density of a fracturing fluid, this time it is assumed that clean water is taken as the fracturing fluid, and $\rho = 1000$ kg/m³; g is a gravity acceleration and g=10N/kg; $H_c$ is a height difference of the electromagnetic transmission high-pressure sealing pipe column, since a hole is in the coal seam and a finally branch hole enters the coal seam, the height difference is negligible, $P_H = 0$MPa; $P_r$ is friction resistance along a fracturing fluid, $P_r = a L_g \lambda_1$, $L_g$ is a pipeline length, assuming that $L_g$ is 0.1km, $\lambda_1$ is a friction resistance coefficient, assuming that a friction resistance coefficient $\lambda_1$ of a pipeline is 8, and after calculation, $P_r = 0.8$MPa. After calculation, the pumping pressure $P_w$ of the fracturing pump is 22.5MPa.

According to parameters of a borehole spacing designed for fracturing the target coal and rock strata and the like and considering pressure water leakage, the fracturing water volume $V_{water}$ is estimated.

A formula for calculating the $V_{water}$ is as follows:

$$V_{water} = 0.02 V_{body} \lambda 2$$

where $V_{body}$ is a volume of the coal seam in a designed fracturing influence range, and according to borehole spacing segmentation parameters and the like, an estimated volume of the coal seam is about 1953m$^3$; $\lambda_2$ is a water absorption coefficient of the roof and floor rock strata, and is valued according to the roof rock strata firmness coefficient $f_2$, when $f_2 > 2$, $\lambda_2$ is 1, and when $f_2$ is other values, $\lambda_2 = 1.7 - 0.35\ f_2$. After calculation, $V_{water} = 39.06m^3$.

In step 5, a fracturing segment length W and a fracture segment spacing U of the long directional borehole parallel to the roof are calculated. Since a borehole type selected for this time is the long directional borehole parallel to the roof + the branch hole, no calculation is needed in this step.

In step 6, a hydraulic fracturing operation is performed according to the above-mentioned design parameters.

A fracturing operation while drilling with the long directional borehole parallel to the roof + the branch hole: before drilling construction by using a whole set of the device for regionalized coal mine gas drainage in the deep hole, a dual-mode differential pressure sliding sleeve screen pipe integrated nipple 804 is adjusted to control a spacing between an upper packer 802 and a lower packer 806, so that the spacing is greater than an expected length of a borehole in a coal seam segment. After the long directional borehole parallel to the roof is completed, construction of a first branch hole is started at bottom of a hole, and after the construction is completed, positions of the upper packer 802 and the lower packer 806 are adjusted so that they are respectively located at a floor of the coal seam and a roof of the coal seam. According to design of segmented hydraulic fracturing parameters, a high-pressure and large-flow centralized liquid supply device is started and controlled to start fracturing, the fracturing pressure is adjusted to be higher than the pumping pressure $P_w$ of the fracturing pump being 22.5MPa, and fracturing of the first branch hole is stopped when the fracturing water volume $V_{water} = 39.06m^3$ is completed. The electromagnetic transmission high-pressure sealing pipe column 5 is dragged so that a drill bit is at an opening point of a second branch hole, and a distance between a second opening point and a first opening point is O=31.25m, drilling of the second branch hole is started and fracturing while drilling is performed, and above steps are repeated until fracturing of all branch holes is completed.

In step 7, water drainage is performed after fracturing, a hole is sealed, and a drainage device is connected for drainage. When the water drainage is performed after fracturing, a temporary negative pressure device is installed at an orifice and is configure to suck out a positive pressure gas in a water drainage process to prevent a gas inside a drilling field from exceeding a limit. When a water drainage flow is less than $V_P$, a cement mortar is adopted to seal the hole, where $V_P$ is taken within a range of 0.2 to 0.5m$^3$/h. After the hole is sealed, the drainage device is connected for drainage. The water drainage is performed after fracturing, the hole is sealed, and the drainage device is connected for drainage.

As mentioned above, a similar solution can be derived from the solutions given in the accompanying drawings. Any modification or equivalent substitution of technical solutions of the present invention shall be included in the scope of the claims of the present invention without departing from the purpose and scope of the technical solutions of the present invention.

In the description of the present invention, it is to be understood that, the orientation or positional relationship indicated by terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" is based on the orientation or positional relationship shown in the accompanying drawings, which is only for the convenience of describing the present invention and simplifying the description, and is not intended to indicate or imply that the device or element being referred to must have a particular orientation, be constructed and operated in a particular orientation, so it cannot be construed as a limitation of the present invention.

In addition, terms such as "first" and "second" are used for purposes of description and are not intended to indicate or imply relative importance or significance or to imply the number of indicated technical features. Thus, the feature defined with "first" and "second" may explicitly or implicitly include at least one of these features. In the description of the present invention, "a plurality of" means at least two, such as two, three, etc., unless specified otherwise.

In the present invention, unless specified or limited otherwise, terms "installation," "interconnection," "connection," and "fixation" are used broadly, and may be, for example, fixed connections, detachable connections, or integral connections; it may be mechanical connections, electrical connections, or communicated with each other; it may be direct connections or indirect connections via an intermediary; it may also be inner communications of two elements or the interaction between two elements, unless specified otherwise. Specific meanings of the above-mentioned terms in the present invention may be understood by those ordinarily skilled in the art according to specific situations.

In the present invention, unless specified or limited otherwise, a first feature is "on" or "below" a second feature may be that the first feature is in direct contact with the second feature, or the first feature and the second feature are in indirect contact through an intermediary. Furthermore, a first feature "on," "above," or "on top of" a second feature may be that the first feature is right or obliquely "on," "above," or "on top of" the second feature, or just means that the first feature is at a height higher than that of the second feature. A first feature "below," "under," or "on bottom of" a second feature may be that the first feature is right or obliquely "below," "under," or "on bottom of" the second feature, or just means that the first feature is at a height lower than that of the second feature.

In the present invention, terms "an embodiment," "some embodiments," "an example," "a specific example," or "some examples," mean that a particular feature, structure, material, or characteristic described in connection with the embodiment or example is included in at least one embodiment or example of the present invention. The schematic expressions of the above-mentioned terms throughout this specification are not necessarily referring to the same embodiment or example. Moreover, the particular features, structures, materials, or characteristics described may be combined in any suitable manner in one or more embodiments or examples. In addition, those skilled in the art may combine the different embodiments or examples and features of different embodiments or examples described in this specification without being mutually inconsistent.

Although the above-mentioned embodiments have been shown and described, it is to be understood that the above-mentioned embodiments are illustrative and cannot be construed as limitations of the present invention, and changes, modifications, substitutions and variations made to the above-mentioned embodiments by those skilled in the art are within the scope of protection of the present invention.

**Claims**

1. A device for regionalized coal mine gas drainage in a deep hole, comprising:

      a high-pressure and large-flow centralized liquid supply device,
      a while-drilling radar geological detection device (4),
      a deep hole adaptive directional drilling rig device,
      an electromagnetic transmission high-pressure sealing pipe column (5), and
      an open hole while-drilling segmented fracturing tool string;
      wherein the high-pressure and large-flow centralized liquid supply device is provided with a double-pump structure (702), an outlet of the double-pump structure (702) is connected to a drilling and fracturing dual-mode liquid supply switching structure (703), and the high-pressure and large-flow centralized liquid supply device is connected to the electromagnetic transmission high-pressure sealing pipe column (5); the electromagnetic transmission high-pressure sealing pipe column (5) is configured to provide a fracturing fluid for the open hole while-drilling segmented fracturing tool string, and provide a drilling fluid for a screw motor (3) of the deep hole adaptive directional drilling rig device; the while-drilling radar geological detection device (4) is respectively connected to the open hole while-drilling segmented fracturing tool string and the screw motor (3) of the deep hole adaptive directional drilling rig device, and transmits a signal via the electromagnetic transmission high-pressure sealing pipe column (5); the open hole while-drilling segmented fracturing tool string is provided with an electromagnetic transmission and communication structure for fracturing while drilling and a dual-mode differential pressure sliding sleeve, data is transmitted via the electromagnetic transmission and communication structure, and a drilling mode and a fracturing mode are switched via the dual-mode differential pressure sliding sleeve.

2. The device for regionalized coal mine gas drainage in the deep hole of claim 1, wherein the high-pressure and large-flow centralized liquid supply device is formed by connecting a water tank (701), the double-pump structure (702), the drilling and fracturing dual-mode liquid supply switching structure (703), a high pressure rubber tube (704), an orifice device (705) and a remote controller (706) in sequence.

3. The device for regionalized coal mine gas drainage in the deep hole of claim 2, wherein the dual-pump structure (702) is provided with a high-pressure and small-flow pump group and a low-pressure and large-flow pump group, and the high-pressure and small-flow pump group and the low-pressure and large-flow pump group are jointly connected on a same chassis, and are jointly connected to the water tank (701) and the remote controller (706).

4. The device for regionalized coal mine gas drainage in the deep hole of claim 2, wherein a one-way valve is provided inside the orifice device (705), a first end of the one-way valve is connected to the electromagnetic transmission high-pressure sealing pipe column (5) in a threaded manner, and a second end of the one-way valve is connected to the high pressure rubber tube (704); a rotating water delivery structure is provided at the second end of the one-way valve connected to the high pressure rubber tube (704), and the one-way valve is configured to control a fluid to pass only from one side of the high pressure rubber tube (704) to one side of the electromagnetic transmission high-pressure sealing pipe column (5), and a pressure gauge and a pressure relief valve are also provided at the one side of the electromagnetic transmission high-pressure sealing pipe column (5); when the high-pressure and large-flow centralized liquid supply device is configured for fracturing, a fracturing fluid is added into the water tank (701), and when the high-pressure and large-flow centralized liquid supply device is configured for drilling, a drilling fluid is added into the water tank (701).

5. The device for regionalized coal mine gas drainage in the deep hole of claim 1, wherein the deep hole adaptive directional drilling rig device comprises a drill bit (1), a near-drill bit while-drilling measurement device (2), a screw motor (3) and an adaptive directional drilling rig host (6).

6. The device for regionalized coal mine gas drainage in the deep hole of claim 5, wherein the near-drill bit while-drilling measurement device (2) is configured to measure drilling trajectory parameters, meanwhile receive geological data information detected by the while-drilling radar geological detection device (4), and transmit data information to the adaptive directional drilling rig host (6) via the electromagnetic transmission high-pressure sealing pipe column (5), and after data analysis and processing, a propelling force and a rotation speed are adaptively adjusted.

7. The device for regionalized coal mine gas drainage in the deep hole of claim 5, wherein the drill bit (1), the near-drill bit while-drilling measurement device (2) and the screw motor (3) are connected in sequence; the screw motor (3) is connected to the while-drilling radar geological detection device (4); the adaptive directional drilling rig host (6) is connected to the electromagnetic transmission high-pressure sealing pipe column (5), and is connected to the high-pressure and large-flow centralized liquid supply device via a high pressure rubber tube (704).

8. The device for regionalized coal mine gas drainage in the deep hole of claim 5, wherein the adaptive directional drilling rig host (6) comprises an anchoring cylinder group (601), an adaptive feeding device (602), a motor assembly (603), a fuel tank assembly (604), an adaptive power head (605), an explosion-proof computer (606) and a crawler platform (607); the anchoring cylinder group (601), the adaptive feeding device (602), the motor assembly (603), the fuel tank assembly (604) and the explosion-proof computer (606) are all integrated on the crawler platform (607); the adaptive power head (605) is located on the adaptive feeding device (602), and is configured to provide rotation power for directional drilling and accurately adjust a tool facing angle of the screw motor (3); the adaptive feeding device (602) is configured to provide a propelling force required for drilling.

9. The device for regionalized coal mine gas drainage in the deep hole of claim 1, wherein the electromagnetic transmission high-pressure sealing pipe column (5) has a center pipe-free structure and adopts an electromagnetic induction mode to perform signal transmission, and a pressure bearing capacity of a sealing structure is greater than a highest pressure of the high-pressure and large-flow centralized liquid supply device, and the signal transmission is not affected.

10. The device for regionalized coal mine gas drainage in the deep hole of claim 9, wherein the electromagnetic transmission high-pressure sealing pipe column (5) is configured to transmit a drilling fluid for a screw motor (3) in a drilling process, transmit a fracturing fluid for the open hole while-drilling segmented fracturing tool string in a fracturing process, transmit a drilling rig command signal in drilling and fracturing processes, and feed back detection result information of the while-drilling radar geological detection device (4) and state information of a drill bit (1).

11. The device for regionalized coal mine gas drainage in the deep hole of claim 1, wherein the open hole while-drilling segmented fracturing tool string comprises an upper conversion structure (801), an upper packer (802), an upper centralizer (803), a dual-mode differential pressure sliding sleeve screen pipe integrated nipple (804), a lower centralizer (805), a lower packer (806) and a lower conversion structure (807), wherein the upper conversion structure (801) is connected to the while-drilling radar geological detection device (4), and the lower conversion structure (807) is connected to the electromagnetic transmission high-pressure sealing pipe column (5); the upper conversion structure (801), the upper packer (802), the upper centralizer (803), the dual-mode differential pressure sliding sleeve screen pipe integrated nipple (804), the lower centralizer (805), the lower packer (806) and the lower conversion structure (807) are all provided with electromagnetic transmission structures; the dual-mode differential pressure sliding sleeve screen pipe integrated nipple (804) comprises a dual-mode differential pressure sliding sleeve and a screen pipe, wherein the dual-mode differential pressure sliding sleeve is provided with a dual-mode structure of drilling and fracturing, and the screen pipe is configured for discharging high-pressure water.

12. The device for regionalized coal mine gas drainage in the deep hole of claim 11, wherein the dual-mode differential pressure sliding sleeve is configured to automatically switch the drilling mode and the fracturing mode by adjusting a liquid supply pressure of the high-pressure and large-flow centralized liquid supply device, and it is the drilling mode when the liquid supply pressure is $P_d$ or lower, and it is the fracturing mode when the liquid supply pressure is greater than $P_d$, wherein $P_d$ is adjustable between 10 and 20 MPa.

13. The device for regionalized coal mine gas drainage in the deep hole of claim 12, wherein, in the drilling mode, the high-pressure water does not enter the upper packer (802), the lower packer (806) and the screen pipe, so as to avoid expansion of the upper packer (802) and the lower packer (806) and water discharge of the screen pipe, and the high-pressure water only enters the screw motor (3) and is configured to provide power; in the fracturing mode, the high-pressure water does not enter the screw motor (3), the upper packer (802) and the lower packer (806) expand to seal a hole, and water from the screen pipe is subjected to segmented internal fracturing, when the pressure drops to $P_d$ or lower, the dual-mode differential pressure sliding sleeve closes the fracturing mode, the upper packer (802) and the lower packer (806), and the upper packer (802) and the lower packer (806) are depressurized and contracted.

14. The device for regionalized coal mine gas drainage in the deep hole of claim 1, wherein the while-drilling radar geological detection device (4) comprises a transmitting conformal antenna array (401), a transmitter control circuit (402), a receiver control circuit (403), a radar signal processor (404), an MEMS acceleration sensor (405), and a receiving conformal antenna array (406).

15. The device for regionalized coal mine gas drainage in the deep hole of claim 14, wherein a signal processing process of the radar signal processor (404) is as follows: after the transmitting conformal antenna array (401) spirally scans all surrounding space, an intermittent radar reflection interface is formed, and a coal-rock interface at top and bottom of a mining face is extracted in a three-dimensional space, so as to provide layered boundaries for spatial subdivision; when a radar wave propagates in a coal seam, an amplitude decreases with increase of a propagation distance, and a phase shifts accordingly, and at a stratum interface, the radar wave is deflected and reflected; based on an amplitude intensity and a phase shift of a reflected wave, coal seam attributes on a radar wave path are inversed by using tomography theory, and change information of the coal seam is characterized.

16. The device for regionalized coal mine gas drainage in the deep hole of claim 15, wherein a tetrahedral subdivision unit is adopted for subdividing the three-dimensional space, thereby dispersing an entire three-dimensional space; for a small-scale aperture constraint near a borehole, regional densification is performed; a subdivision size is increased in a detection edge area.

17. A method for regionalized coal mine gas drainage in a deep hole, applied to a device for regionalized coal mine gas drainage in a deep hole according to any one of claims 1 to 16, comprising:

step 1, obtaining parameters of a geological environment, a stress state and physical mechanics of coal and rock strata, wherein the parameters of the coal and rock strata comprise a coal seam firmness coefficient $f_1$, a roof firmness coefficient $f_2$, a segment strike length L, a segment dip length N, a coal seam thickness h, a coal and rock tensile strength $\sigma_t$, a coal seam buried depth H, a coal seam original horizontal maximum principal stress $\sigma_H$, a coal seam original horizontal minimum principal stress $\sigma_h$, a pore pressure $P_0$, a relative dielectric constant $\varepsilon_r$ of a underground medium, a water absorption coefficient $\lambda_2$ of the roof and floor rock strata;

step 2, designing types of drainage boreholes and corresponding borehole parameters according to obtained parameters of the coal and rock strata and design formulas;

step 3, adaptively adjusting, by a deep hole adaptive directional drilling rig device, a propelling force and a rotation speed of the deep hole adaptive directional drilling rig device according to the drainage borehole parameters set in step 2 and based on geological information detected continuously by a while-drilling radar geological detection device (4) in real time in a drilling process, so as to perform construction of a long directional borehole parallel to the roof;

step 4, calculating, according to parameters of target coal and rock strata for fracturing, a fracturing pressure $P_k$ of the coal seam, a pumping pressure $P_w$ of a fracturing pump and a fracturing water volume $V_{water}$;

step 5, calculating a fracturing segment length W and a fracture segment spacing U of the long directional borehole parallel to the roof;

step 6, performing a hydraulic fracturing operation with the parameters obtained in step 4 and step 5 as design parameters;

step 7, performing water drainage after fracturing, sealing a hole, and connecting a drainage device for drainage.

18. The method for regionalized coal mine gas drainage in the deep hole of claim 17, wherein a design method of the types of drainage boreholes in step 2 is as follows:

the types of drainage boreholes are divided into: a long directional borehole parallel to the roof and a long directional borehole parallel to the roof + a branch hole, assuming that a ratio of the roof firmness coefficient $f_2$ to the coal seam firmness coefficient $f_1$ is D, and D is calculated by:

$$D=\frac{f_2}{f_1}$$

where when D > 2, the long directional borehole parallel to the roof is used, and when D≤2, the long directional borehole parallel to the roof + the branch hole are used.

19. The method for regionalized coal mine gas drainage in the deep hole of claim 18, wherein a design method of the borehole parameters corresponding to the types of drainage boreholes in step 2 is as follows:

when the branch hole is constructed, a depth of a drill bit (1) passing through the coal seam and entering the floor is x, where a value of x is 5 to 10m;
parameters of the long directional borehole parallel to the roof: a horizon of the long directional borehole parallel to the roof is located at M above the coal seam, a borehole length is K, a borehole spacing is P, a number of boreholes is B, and values of M, K, P and B are calculated as follows, where ε=1m²:

$$M=2h-f_2$$

$$K=L+30$$

$$P=\frac{50}{M}\varepsilon$$

$$B=\frac{N-60}{P}$$

parameters of the long directional borehole parallel to the roof + the branch hole: a horizon of the long directional borehole parallel to the roof is located at M above the coal seam, a borehole length is K, a borehole spacing is P, a number of main boreholes is B, a branch borehole spacing is O=P, and a number of branch holes is q, and q is calculated by:

$$q=\frac{K}{O}$$

20. The method for regionalized coal mine gas drainage in the deep hole of claim 17, wherein in step 3, the while-drilling radar geological detection device (4) performs continuous detection in real time in the drilling process, and a specific process is as follows: when the while-drilling radar geological detection device (4) performs detection, a receiver control circuit (403) synchronizes a command from a transmitter control circuit (402), and senses a posture of the while-drilling radar geological detection device (4) in real time via an MEMS acceleration sensor (405), and the while-drilling radar geological detection device (4) starts one or more groups of corresponding transmitting conformal antenna arrays (401) and receiving conformal antenna arrays (406) according to its own posture, to perform detection data collection and data analysis, so as to reverse the geological information around a directional detection borehole; the while-drilling radar geological detection device (4) transmits coal-rock interface information to the deep hole adaptive directional drilling rig device via the electromagnetic transmission high-pressure sealing pipe column (5), and the deep hole adaptive directional drilling rig device adjusts an orientation and inclination of the screw motor (3) in real time according to the coal-rock interface information in the drilling process, so as to ensure a horizon of a borehole design.

21. The method for regionalized coal mine gas drainage in the deep hole of claim 20, wherein a formula for calculating a depth H of a target body at a coal-rock interface detected by the while-drilling radar geological detection device (4) is as follows:

$$H=\frac{\sqrt{v^2t^2-x^2}}{2}$$

where v is a wave velocity of an electromagnetic wave in a medium; $t$ is a travel time of the electromagnetic wave measured by a detection instrument; x is a distance between the transmitting conformal antenna array (401) and the receiving conformal antenna array (406); a value of v can be directly measured by a wide angle method or calculated according to an approximate calculation formula:

$$v\approx\frac{c}{\sqrt{\varepsilon_r}}$$

where c is a speed of light, and $\varepsilon_r$ is a relative dielectric constant of an underground medium; a formula for calculating a self-sensing direction of the while-drilling radar geological detection device (4) is as follows:

$$\theta = \arcsin \frac{g_y}{\sqrt{g_y^2 + g_z^2}}$$

where $\theta$ is an angle between a main detection direction of the while-drilling radar geological detection device (4) and a normal direction of the coal-rock interface; $g_y$ is an acceleration measurement value of a sensing shaft of the while-drilling radar geological detection device (4) in an initial horizontal radial direction thereof; and $g_z$ is an acceleration measurement value of a sensing shaft of the while-drilling radar geological detection device (4) in an initial vertical direction thereof.

22. The method for regionalized coal mine gas drainage in the deep hole of claim 17, wherein a formula for calculating the fracturing pressure $P_k$ of the coal seam in step 4 is as follows:

$$P_k = 3\sigma_h - \sigma_H + \sigma_t - P_0$$

where $\sigma_h$ is an original minimum principal stress of the coal seam in a horizontal direction, $\sigma_H$ is an original maximum principal stress of the coal seam in the horizontal direction, $\sigma_t$ is a tensile strength of the coal and rock, and $P_0$ is a pore pressure; a required pumping pressure $P_w$ of the fracturing pump is calculated, and a formula for calculating the $P_w$ is as follows:

$$P_w = P_k + P_H + P_r$$

where $P_H$ is a pressure of a fracturing pipeline liquid column, $P_H = \rho g H_c$; $\rho$ is a density of a fracturing fluid; g is a gravity acceleration, $H_c$ is a height difference of the electromagnetic transmission high-pressure sealing pipe column (5), and it is an elevation of a final hole of a borehole minus an elevation of an opening; $P_r$ is friction resistance along a fracturing fluid, $P_r = aL_g\lambda_1$, $L_g$ is a pipeline length, $\lambda_1$ is a friction resistance coefficient, a=1MPa/km; according to borehole spacing parameters designed for fracturing the target coal and rock strata and considering pressure water leakage, the fracturing water volume $V_{water}$ is estimated, a formula for calculating the $V_{water}$ is as follows:

$$V_{water} = 0.02 V_{body} \lambda_2$$

where $V_{body}$ is a volume of the coal seam in a designed fracturing influence range; $\lambda_2$ is a water absorption coefficient of the roof and floor rock strata, and is valued according to the roof firmness coefficient $f_2$: when $f_2 > 2$, $\lambda_2$ is 1, and when $f_2$ is other values, $\lambda_2 = 1.7 - 0.35 f_2$.

23. The method for regionalized coal mine gas drainage in the deep hole of claim 17, wherein in step 5, the fracturing segment length W and the fracturing segment spacing U of the long directional borehole parallel to the roof are calculated by:

$$W = \sqrt{\frac{50}{M}} \beta$$

$$U = \sqrt{\frac{50}{M}} \frac{f_2}{f_1} h\beta$$

where $f_1$ is a coal seam firmness coefficient, $f_2$ is a roof firmness coefficient, M is a distance from a directional long borehole to the coal seam, h is a thickness of the coal seam, and $\beta = 1m^{3/2}$.

24. The method for regionalized coal mine gas drainage in the deep hole of claim 17, wherein in step 6, the hydraulic fracturing operation is performed according to the design parameters, and for a fracturing operation while drilling with the long directional borehole parallel to the roof, specific steps are as follows:

before drilling construction by using the device for regionalized coal mine gas drainage in the deep hole, a dual-mode differential pressure sliding sleeve screen pipe integrated nipple (804) is adjusted to control a spacing between an upper packer (802) and a lower packer (806) to the fracturing segment length W of the long directional borehole parallel to the roof; after completion of the long directional borehole parallel to the roof, a high-pressure and large-flow centralized liquid supply device is started and controlled according to design of segmented hydraulic fracturing parameters, to start fracturing, a fracturing pressure is adjusted to be higher than the pumping pressure $P_w$ of the fracturing pump, first segment fracturing at a bottom of a hole is stopped when the fracturing water volume $V_{water}$ is completed, and an electromagnetic transmission high-pressure sealing pipe column (5) is dragged to drive an open hole while-drilling segmented fracturing tool string, so that a distance between the upper packer (802) and the lower packer (806) of the first segment fracturing is the fracturing segment spacing U for second segment fracturing, above steps are repeated until all segment fracturing is completed.

25. The method for regionalized coal mine gas drainage in the deep hole of claim 17, wherein in step 6, the hydraulic fracturing operation is performed according to the design parameters, and for a fracturing operation while drilling with the long directional borehole parallel to the roof and the branch hole, specific steps are as follows:

before drilling construction by using the device for regionalized coal mine gas drainage in the deep hole, a dual-mode differential pressure sliding sleeve screen pipe integrated nipple (804) is adjusted to control a spacing between an upper packer (802) and a lower packer (806), so that the spacing is greater than a length of a borehole in a coal seam segment, after the long directional borehole parallel to the roof is completed, construction of a first branch hole is started at bottom of a hole, and after the construction is completed, positions of the upper packer (802) and the lower packer (806) are adjusted so that they are respectively located at a floor of the coal seam and a roof of the coal seam; a high-pressure and large-flow centralized liquid supply device is started and controlled according to design of segmented hydraulic fracturing parameters, to start fracturing, the fracturing pressure is adjusted to be higher than the pumping pressure $P_w$ of the fracturing pump, and fracturing of the first branch hole is stopped when the fracturing water volume $V_{water}$ is completed; the electromagnetic transmission high-pressure sealing pipe column (5) is dragged so that a drill bit (1) is at an opening point of a second branch hole, and a distance between a second opening point and a first opening point is O, drilling of the second branch hole is started and fracturing while drilling is performed, and above steps are repeated until fracturing of all branch holes is completed.

26. The method for regionalized coal mine gas drainage in the deep hole of claim 17, wherein in step 7, when the water drainage is performed after fracturing, a temporary negative pressure device is installed at a borehole orifice and is configure to suck out a positive pressure gas in a water drainage process to prevent a gas inside a drilling field from exceeding a limit, when a water drainage flow is less than $V_P$, a cement mortar is adopted to seal the hole, where $V_P$ is taken within a range of 0.2 to 0.5m³/h, and after the hole is sealed, the drainage device is connected for drainage.

FIG. 1

FIG. 2

**EP 4 603 673 A1**

FIG. 3

FIG. 4

23

FIG. 5

FIG. 6

## INTERNATIONAL SEARCH REPORT

| International application No. |
|---|
| **PCT/CN2023/123822** |

### A. CLASSIFICATION OF SUBJECT MATTER

E21B 7/04(2006.01)i

According to International Patent Classification (IPC) or to both national classification and IPC

### B. FIELDS SEARCHED

Minimum documentation searched (classification system followed by classification symbols)

IPC:E21B

Documentation searched other than minimum documentation to the extent that such documents are included in the fields searched

Electronic data base consulted during the international search (name of data base and, where practicable, search terms used)

CNABS, CNTXT, DWPI, SIPOABS, ENTXT, CNKI: 抽采, 液压, 钻, 雷达, 探测, 压裂, 煤, mining, extraction, hydraulic, drill, radar, detect, fracturing, coal;

### C. DOCUMENTS CONSIDERED TO BE RELEVANT

| Category* | Citation of document, with indication, where appropriate, of the relevant passages | Relevant to claim No. |
|---|---|---|
| PX | CN 115324482 A (CHINA COAL TECHNOLOGY & ENGINEERING GROUP CORP. et al.) 11 November 2022 (2022-11-11) description, paragraphs 6-86 | 1-26 |
| A | CN 105971517 A (XI'AN RESEARCH INSTITUTE OF CHINA COAL TECHNOLOGY & ENGINEERING GROUP) 28 September 2016 (2016-09-28) description, paragraphs 6-53, and figures 1-3 | 1-26 |
| A | CN 113279808 A (ANHUI UNIVERSITY OF SCIENCE AND TECHNOLOGY et al.) 20 August 2021 (2021-08-20) entire document | 1-26 |
| A | US 2020095860 A1 (HALLIBURTON ENERGY SERVICES, INC.) 26 March 2020 (2020-03-26) entire document | 1-26 |
| A | US 2021262341 A1 (CHINA UNIVERSITY OF MINING AND TECHNOLOGY et al.) 26 August 2021 (2021-08-26) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 November 2023** | **12 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/123822**

| Patent document cited in search report | | | Publication date (day/month/year) | Patent family member(s) | | | Publication date (day/month/year) |
|---|---|---|---|---|---|---|---|
| CN | 115324482 | A | 11 November 2022 | None | | | |
| CN | 105971517 | A | 28 September 2016 | None | | | |
| CN | 113279808 | A | 20 August 2021 | None | | | |
| US | 2020095860 | A1 | 26 March 2020 | WO | 2020060589 | A1 | 26 March 2020 |
| | | | | NO | 20190969 | A1 | 23 March 2020 |
| | | | | CA | 3051279 | A1 | 21 March 2020 |
| | | | | GB | 201910927 | D0 | 11 September 2019 |
| | | | | GB | 2577378 | A | 25 March 2020 |
| US | 2021262341 | A1 | 26 August 2021 | US | 11174722 | B2 | 16 November 2021 |
| | | | | WO | 2020258589 | A1 | 30 December 2020 |
| | | | | AU | 2019440174 | A1 | 21 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211253874